# EUROPÄISCHE PATENTSCHRIFT

(11) **EP 0 776 695 B1**
(45) Veröffentlichungstag und Bekanntmachung des Hinweises auf die Patenterteilung: **17.04.2002**
(21) Anmeldenummer: 95810748.4
(22) Anmeldetag: 29.11.1995
(51) Int. Cl.: B01J 19/32

(54) **Packung für eine Gegenstrom-Hochdruckkolonne**
Packing for a high-pressure counterflow column
Elément de garnissage pour une colonne à haute pression et à contre-courant

(43) Veröffentlichungstag der Anmeldung: 04.06.1997
(73) Patentinhaber: Sulzer Chemtech AG, 8404 Winterthur (CH)
(72) Erfinder: Brunner, Bernhard, CH-8408 Winterthur (CH); Süess, Philipp, CH-8413 Neftenbach (CH)
(74) Vertreter: Sulzer Management AG

(56) Entgegenhaltungen:
- EP-A- 0 462 048
- EP-A- 0 614 695
- DE-A- 1 904 144
- FR-A- 961 875
- US-A- 2 042 127
- US-A- 4 842 778

## Beschreibung

Die Erfindung betrifft eine Packung für eine Gegenstrom-Hochdruckkolonne sowie Hochdruckkolonnen mit derartigen Packungen und Verwendungen solcher Kolonnen.

Es ist eine Vielzahl von Packungen für Kolonnen bekannt, in denen ein Stoffaustausch zwischen einer Flüssigkeit und einem im Gegenstrom geführten Gasstrom durchführbar ist. Die DE-A- 1 904 144 offenbart eine derartige Packung aus geformten, horizontale Kanäle bildenen Lamellen, wobei die Flüssigkeit auf perforierten Wänden der Kanäle mit dem Gas in Kontakt gebracht wird. In der EP-A- 0 585 550 ist eine Packung beschrieben, in der die Flüssigkeit als Rieselfilm auf wellenförmigen Lamellenoberflächen fliessen. Aus der GB-A- 1 013 777 ist eine ähnliche Packung bekannt, wobei diese Packung aus einer Vielzahl von vertikalen und parallel angeordneten Teilpackungen besteht, zwischen denen vertikale Wände eine lückenlose Trennung der einzelnen Teilpackungen bilden.

Geordnete Packungen, die aus geformten, parallel zur Kolonnenachse ausgerichteten Blechlamellen aufgebaut sind, haben sich für Trennkolonnen bei Niederdruck - (Vakuum bis Atmmosphärendruck) gut bewährt. Es sind auch Versuche bei Hochdruck (bis 50 bar) mit Erfolg durchgeführt worden.

Diese Versuche sind mit einer Pilotkolonne vorgenommen worden, die folgende geometrische Eigenschaften aufweist: Die Höhe der Kolonne ist-18 m und deren Innendurchmesser 35 cm; die Packung setzt sich aus 20 cm hohen, zylindrischen Packungskörpern zusammen. Diese Körper sind aus Metallblech gefertigt und weisen eine offene Kreuzkanalstruktur auf; sie bestehen jeweils aus strukturierten, schräg gefalteten Blechlamellen, die so aufeinander geschichtet sind, dass sich offene, sich kreuzende Kanäle bilden, die schräg zur Kolonnenachse verlaufen. Die aufeinander gestapelten Packungskörper sind derart orientiert, dass die durch die Lamellen gegebenen Lagen von benachbarten Körpern quer zueinander gerichtet sind und dass insbesondere die Orientierung jeweils um 90° wechselt.

Ein die Packung durchströmendes Gas bewegt sich im wesentlichen in Form einer Pfropfströmung. Es erfährt in den Packungskörpern ein Vermischung in Richtung der Lagen. Dank der alternierenden Orientierung benachbarter Packungskörper erfolgt eine vollständige Vermischung über den Kolonnenquerschnitt.

Lässt man zwecks einer Rektifikation ein Gas (Dampfstrom) und eine Flüssigkeit (Rieselfilm) im Gegenstrom durch die Packung fliessen, so führt ein Wärme- und Stoffaustausch zwischen den beiden Phasen zu einer guten Trennwirkung, falls die Flüssigkeit mit einem Verteiler gleichmässig über den Packungsquerschnitt aufgebracht wird. Eine Rektifikation lässt sich erfolgreich bis zur Belastungsgrenze der Packung durchführen. Entsprechende Versuche sind auch mit Erfolg bei der Durchführung von Druckabsorptionsverfahren in Pilotkolonnen gemacht worden.

Versuche bei Hochdruckkolonnen mit grösseren Durchmessern, d.h. mit Durchmessern grösser als rund 50 cm, sind fehlgeschlagen. Der Grund für das Scheitern ist das Auftreten von Instabilitäten. Da bei Hochdruck die Dichten der beiden Phasen sich höchstens um rund eine Grössenordnung (d.h. eine Zehnerpotenz) unterscheiden, ergibt sich ein grosser Impulsaustausch zwischen den beiden Fluidphasen, und folglich liegen grosse Scherkräfte zwischen den beiden Fluidströmen vor. Aufgrund einer geringen Oberflächenspannung der flüssigen Phase und aufgrund der Scherkräfte kann der Gasstrom Flüssigkeit in Form von Tröpfchen mit sich reissen. Es erfolgt eine Segregation, d.h. eine Umverteilung der Phasen, bei der sich Gassen mit einem lokal vergrösserten Gasstrom und entsprechend Bäche mit einem lokal vergrösserten Flüssigkeitsstrom ausbilden. Es liegt somit kein gleichmässiger Rieselfilm der Flüssigkeit und keine Pfropfströmung des Gases mehr vor. Folglich ergibt sich eine massive Verschlechterung der Trennwirkung.

Als Massnahme zur Abhilfe von Instabilitäten in Hochdruckkolonnen lässt sich folgendes vorschlagen: Die Packung wird in Teile gegliedert, die jeweils eine Folge von nur wenigen Packungskörpern umfasst. Zwischen aufeinanderfolgende Packungsteilen wird ein Gas/Flüssigkeitsverteiler angeordnet, wie er in der EP-PS 0 462 048 (= P.6362) beschrieben ist. Ein derartiger Verteiler erstreckt sich über den ganzen Kolonnenquerschnitt und umfasst eine Vielzahl von Rohren (Dampfkaminen) für die Weiterleitung des Gases sowie Röhrchen für die Ableitung der Flüssigkeit.

Diese bekannte Massnahme bringt einen grossen apparativen Aufwand mit sich. Sie macht auch im Vergleich zu Kolonnen mit ungeteilten Packungen eine Vergrösserung der Kolonnenhöhe erforderlich. Es ist daher die Aufgabe der vorliegenden Erfindung, Massnahmen aufzuzeigen, die nicht mit den genannten Nachteilen verbunden sind. Diese Aufgabe ist mit der in Anspruch 1 definierten Packung lösbar; es sind dabei auch geordnete Packungen eingeschlossen, die keine offene Kreuzkanalstruktur aufweisen.

Die Packung für eine Gegenstrom-Hochdruckkolonne mit einer geordneten Anordnung von geformten, parallel zur Kolonnenachse ausgerichteten Lamellen weist erfindungsgemäss folgende Merkmale auf: Die Packung umfasst ein Bündel von in Kolonnenachse sich erstreckenden Strängen. Jeder Strang besteht aus einem Stapel von Packungselementen, wobei benachbarte Elemente, die verschiedenen Strängen zugehören, jeweils einen zur Kolonnenachse senkrechten Packungsabschnitt bilden. Jedes Packungselement ist aus Lagen aufgebaut, die durch die Lamellen gebildet werden. Ferner sind die Lagen derart orientiert, dass spaltartige Zwischenräume zwischen den Lamellen durch querliegende Lamellen benachbarter Packungselemente, die dem gleichen Packungsabschnitt zugehören, seitlich begrenzt werden.

Die abhängigen Ansprüche 2 bis 8 beziehen sich auf besondere Ausführungsformen der erfindungsgemässen Packung. Die Ansprüche 9 bis 11 betreffen Trennkolonnen mit solchen Packungen. Kolonnen mit erfindungsgemässen Packungen lassen sich auch für chemische Reaktionen verwenden. Insbesondere lassen sich in solchen Kolonnen katalytische Reaktionen durchführen, wobei beispielsweise die Oberfläche der Packung mit katalytisch aktiven Stoffen beschichtet ist. Gegenstand der Ansprüche 12 bis 14 ist jeweils eine Verwendung der Trennkolonnen (Rektifikation, Absorption, chemische Reaktionen).

Nachfolgend wird die Erfindung anhand der Zeichnungen erläutert. Es zeigen:
- Fig. 1: den prinzipiellen Aufbau der erfindungsgemässen Packung,
- Fig. 2: einen Strangausschnitt mit fünf Packungselementen,
- Fig. 3: einen Kolonnenquerschnitt,
- Fig. 4: eine wendelartige Anordnung von in vier Strängen gestapelten Packungselementen,
- Fig. 5: ausschnittsweise einen Längsschnitt durch eine Packung,
- Fig. 6: ausschnittsweise einen Querschnitt durch die Packung der Fig.5,
- Fig. 7: Teile zweier benachbarter Lamellen einer Packung mit offener Kreuzkanalstruktur,
- Fig. 8: einen Querschnitt durch eine Packung mit Strängen, der ein hexagonaler Raster zuordenbar ist,
- Fig.9a,b: eine schematische Darstellung der in Fig.8 gezeigten Struktur,
- Fig.10a,b: Varianten zu den Figuren 9a und 9b
- Fig. 11: einen Querschnitt durch eine weitere Packung und
- Fig. 12: einen Längsschnitt durch Einbauten einer Trennkolonne.

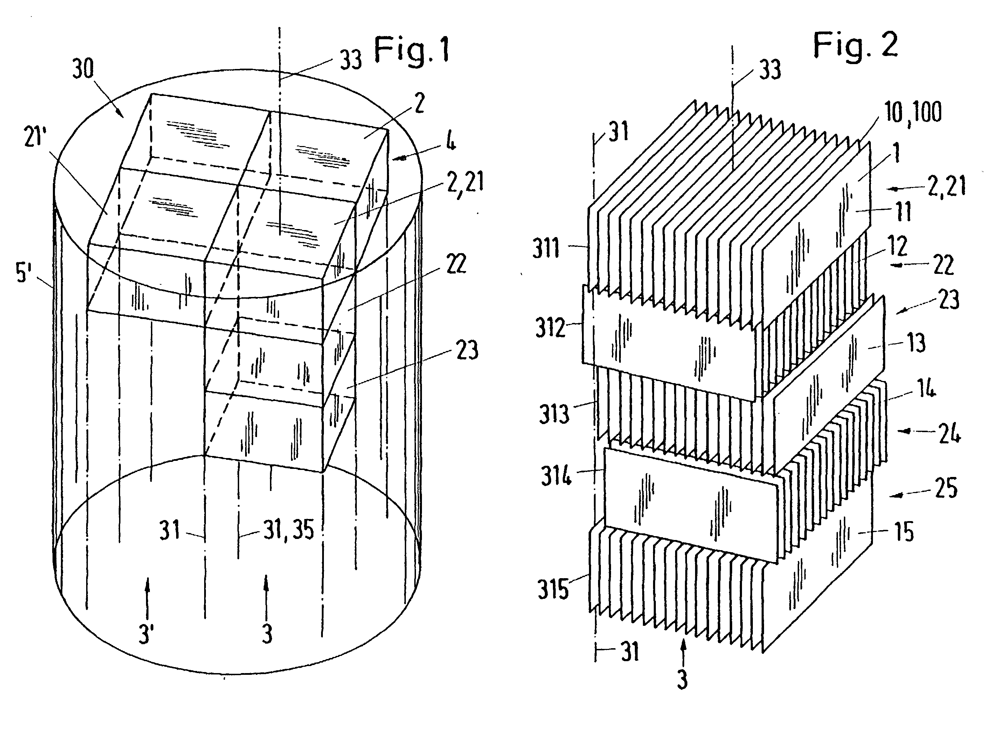

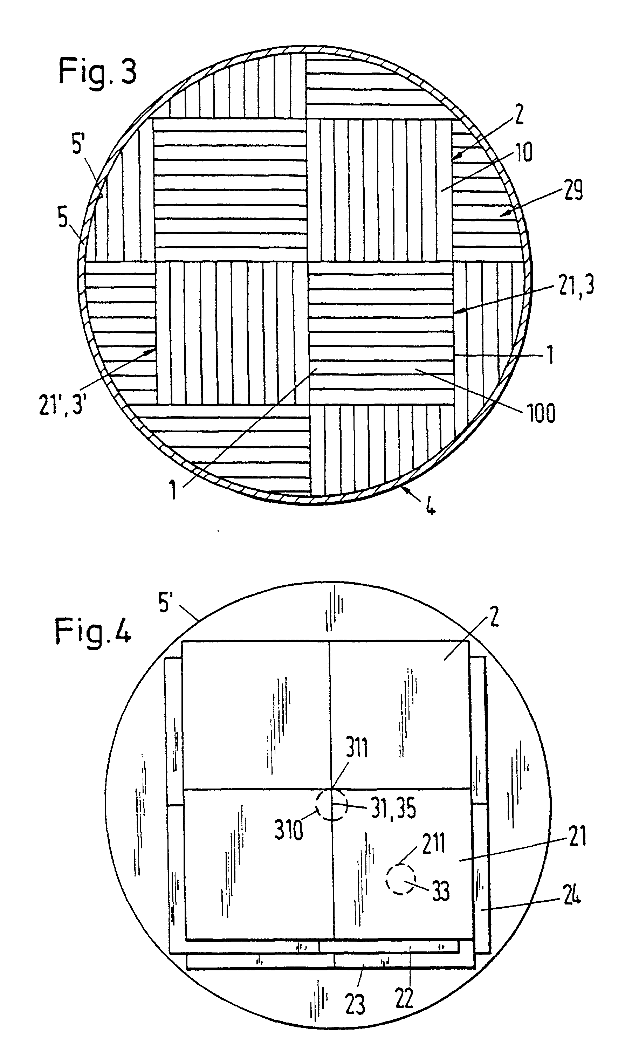

Fig.1 zeigt schematisch einen Teil einer Packung gemäss der Erfindung, die aus Packungselementen 2 aufgebaut ist, welche in einem Bündel 30 von Strängen 3, 3' angeordnet sind. Die Packungselemente 2 sind vereinfacht als Quader dargestellt. Jeder Strang 3, der sich entlang der strichpunktierten Linien, nämlich der Strangkanten 31, parallel zur Kolonnenachse 35 erstreckt, besteht aus einem Stapel benachbarter Packungselemente 21, 22, 23. Benachbarte Packungselemente 21, 21', die verschiedenen Strängen 3, 3' zugehören, bilden jeweils einen zur Kolonnenachse 35 senkrechten Packungsabschnitt 4. Die Mittellinie des Strangs 3 trägt das Bezugszeichen 33. Der Zylinder 5' stellt die innere Oberfläche einer nicht dargestellten Kolonnenwand 5 (vgl. Fig.3) dar.

Die Packungselemente 2 sind - siehe Fig.2 - aus Lagen 10 aufgebaut, die durch Lamellen 1 gebildet werden. Der Einfachheit halber sind die Lamellen 1 als ebene Flächen dargestellt. Zwischen den Lamellen 1 befinden sich spaltoder kanalartige Zwischenräume 100, in denen die zu behandelnden Fluide fliessen können.

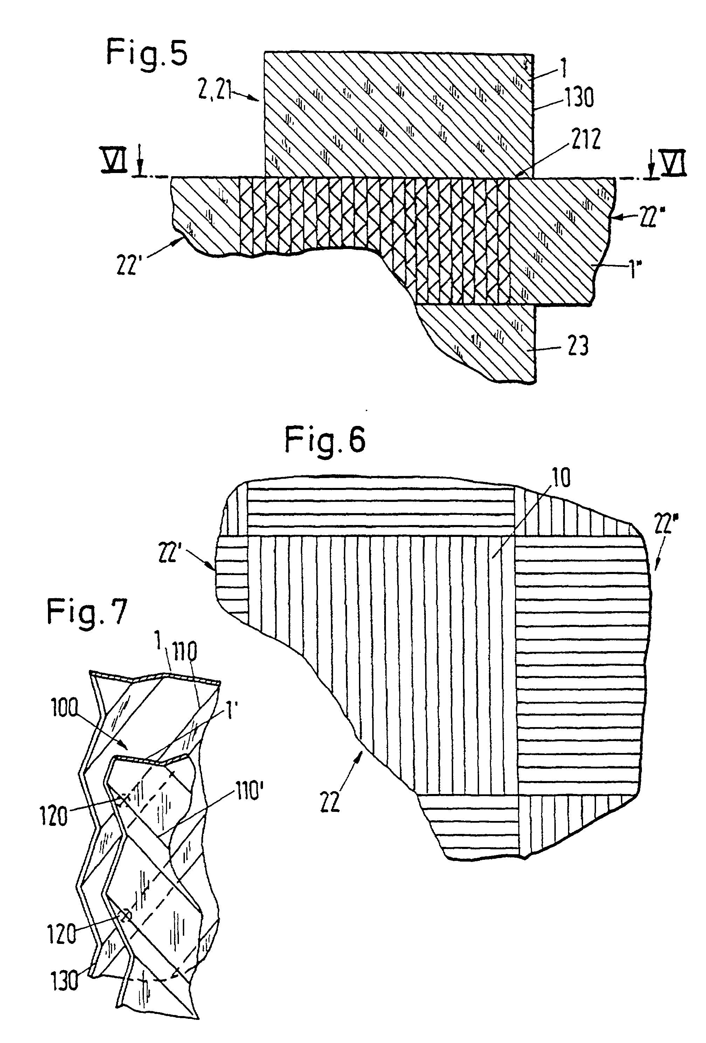

Fig.2 zeigt eine vorteilhafte Ausführungsform des Stapels 3. Die Packungselemente 21, ... 25 des Stapels 3 sind bezüglich der Strangmittellinie 33 exzentrisch angeordnet. Die Seitenkanten 311, ... 315 der Packungselemente 21, ... 25 sind bezüglich der Strangkante 31 wendelartig angeordnet. Aufgrund der exzentrischen Anordnung sind die Seitenflächen 11, 12, 13 benachbarter Packungselemente 21, 22, 23 gegeneinander versetzt. Der Grund für die besondere Anordnung der Packungselemente 2 wird im Zusammenhang mit den Figuren 5 bis 7 erläutert.

Der Kolonnenquerschnitt in Fig.3 zeigt die Anordnung der Packungselemente 2 eines Packungsabschnitts 4, welche aufgrund wechselnder Orientierung der Lagen 10 schachbrettartig ist: Die Lagen 10 eines Packungselements 21 sind derart orientiert, dass die spaltartigen Zwischenräume 100 durch querliegende Lamellen 1 benachbarter Packungselemente 21' seitlich begrenzt werden. Dank dieser seitlichen Begrenzung ist die Strömung des Gases jeweils auf die einzelnen Stränge 3, 3' eingeschränkt. Eine ungleichmässige Durchströmung der Kolonne aufgrund von Instabilitäten kann mittels der strangweisen Führung des Gases verhindert werden.

Mit Vorteil wird der Kolonnenquerschnitt durch die Stränge 3, 3' in Felder aufgeteilt, die alle zumindest annähernd den gleichen Flächeninhalt aufweisen. In diesem Fall nimmt die benötigte Anzahl der Stränge ein Minimum an.

Die randständigen Packungselemente 29 sind der Rundung der Kolonnenwand 9 angepasst. Sie könnten etwas grösser als in Fig.3 dargestellt ausgebildet sein, um einen annähernd gleichen Flächeninhalt wie die in der Mitte liegenden Packungselemente 21 zu haben.

Die Packungselemente 2 in den Figuren 1 bis 4 sind im wesentlichen quaderförmig, wobei die Packungselemente 29 am Kolonnenrand 5' eine der Rundung des Kolonnenquerschnitts angepasste Abweichung von der Quaderform aufweisen. Insbesondere haben die Packungselemente 2 quadratische Grundflächen. Diese könnten aber auch rechteckig sein. Die Packungselemente könnten auch prismatisch, mit einem Parallelogramm als Grundfläche, ausgebildet sein.

Fig.4 zeigt eine Draufsicht auf die Packungselemente 2 mit der wendelartigen Anordnung, die anhand der Fig.2 bereits beschrieben worden ist. Die Seitenkante 311 befindet sich auf dem Kreis 310, dessen Mittelpunkt auf der Strangkante 31 liegt. Die entsprechenden Seitenkanten der Packungselemente 22, ... 24 befinden sich auf dem Kreiszylinder, der durch den Kreis 310 und der Strangkante 31 als Achse gegeben ist. Entsprechendes gilt für den Mittelpunkt 211 des Packungselement 21 und die Mittelpunkte der Packungselemente 22, ... 24, die exzentrisch zur Strangmittellinie 33 liegen.

Das Auftreten von Stossstellen zwischen den Packungselementen ist mit einem bekannten Problem verbunden: Der Rieselfilm wird aufgrund der Strukturierung der Lamellen teilweise gegen die seitlichen Lamellenkanten gelenkt. Dort bilden sich Bäche von randgängiger Flüssigkeit aus. Diese Erscheinung hat offensichtlich einen negativen Einfluss auf den Trennwirkungsgrad. Aus der EP-A 0 614 695 (= P.6558) sind Massnahmen bekannt, mit denen sich das Auftreten von randgängiger Flüssigkeit verhindern lässt. Diese Massnahmen sind ziemlich aufwendig. Daher ist bei der vorliegenden Erfindung eine einfachere Massnahme vorgesehen: Es handelt sich dabei um die schon beschriebene exzentrische Anordnung der Packungselemente.

Fig. 5 illustriert diese Massnahme anhand des Längsschnitts durch eine Packung mit einer offenen Kreuzkanalstruktur. Fig.6 zeigt einen Querschnitt der Packung gemäss der Schnittlinie VI-VI in Fig.5. Während in Fig.5 die Kanalstruktur angedeutet ist, sind in Fig.6 lediglich die Lagen 10 angegeben. Zur Veranschaulichung der offenen Kreuzkanalstruktur ist Fig.7 angefügt. Dort sieht man Teile von zwei benachbarten Lamellen 1 und 1', die zickzackartig gefaltet sind. An den Kreuzungspunkten 120 der Faltkanten 110 und 110' stehen die Lamellen 1 und 1' miteinander in Kontakt. Der Lamellenrand 130 ist eine Stelle, wo sich ein Bach von randgängiger Flüssigkeit ausbildet.

Durch die exzentrische Anordnung der Packungselemente 2 ergeben sich an deren Ränder Überlappungszonen 212 - siehe Fig.5. Randgängige Flüssigkeit des Packungselements 21, die am Rand 130 der Lamelle 1 abfliesst, wird von der Lamelle 1" des untenliegenden Packungselements 22" aufgenommen und wieder neu verteilt. Dadurch ist das Problem der randgängigen Flüssigkeit an Stossstellen zwischen den Packungselementen 2 eines Packungsabschnitts 4 gelöst.

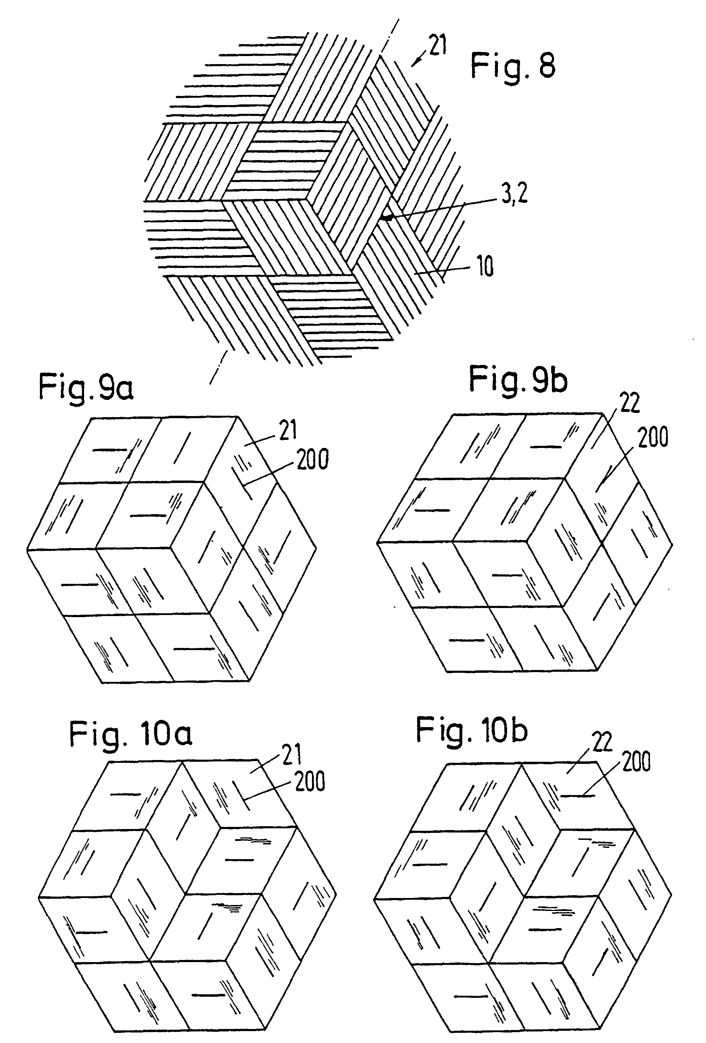

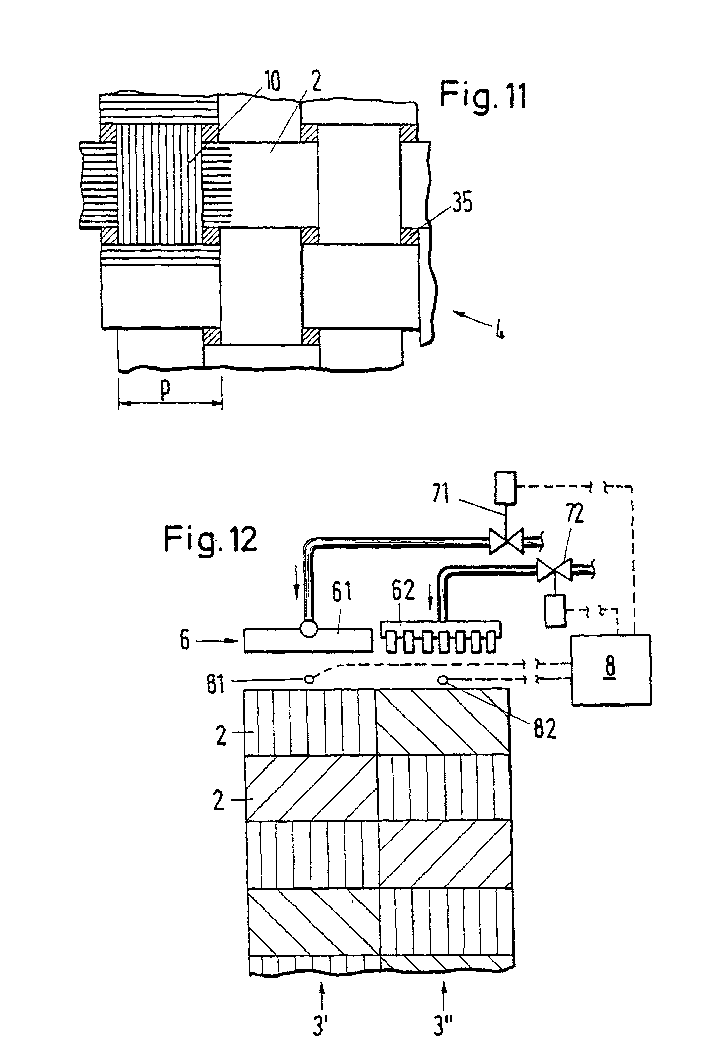

Fig.8 zeigt eine weitere Ausführungsform der erfindungsgemässen Packung: Die Grenzflächen zwischen den Strängen 3 schneiden die Kolonnenquerschnittsebenen in Linien, die ein Netz bilden, dessen Knotenpunkte auf einem hexagonalen Raster liegen. Die geometrische Struktur, die durch die Packungselemente 2 des Packungsabschnitts 4 gegeben ist, stellt die Fig.9a nochmals schematisch dar. Die Linienstücke 200 geben die Orientierung der Lagen 10 an. Fig.9b zeigt die entsprechende Darstellung eines Packungsabschnitts, der zum Abschnitt 4 benachbart ist. Die Orientierungen 200 in Fig.9b bilden ein inverses Bild zu den Orientierungen 200 in Fig.9a. Die Figuren 10a und 10b zeigen eine Strukturvariante zu jener der Figuren 9a bzw. 9b.

Bei dem Ausführungsbeispiel der Fig.11 weisen die Packungselemente 2 eine rechteckige Grundfläche auf, deren eine Seite, hier die längere, in Richtung der Lagen 10 weist. Alle Packungselemente 2 sind gleich. Zwischen den Elementen 2 bestehen Lücken, die mit Füllkörpern 35 ausgefült werden können. Ein zum Packungsabschnitt 4 benachbarter Abschnitt ist gleich aufgebaut. Durch eine Verschiebung der Anordnung um das durch den Pfeil p gegebene Intervall erhält man die Anordnung des benachbarten Abschnitts.

Eine Ursache für Instabilitäten der Fluidströme kann auch sein, dass der Dampf in den unteren Regionen der Trennkolonne eine höhere Temperatur und damit eine kleinere Dichte als in den oberen Regionen hat. Liegt nicht in allen Packungssträngen ein identischer Temperaturverlauf vor, so wirken auf die Gassäulen mit höherem Mittelwert der Temperatur Auftriebskräfte, die zu Verstärkungen der Ungleichheiten führen. Dieser Erscheinung kann abgeholfen werden, indem mit einem geeigneten Flüssigkeitsverteiler die flüssige Phase geregelt den einzelnen Strängen zugeführt wird. Dies soll anhand der Fig.12 näher erläutert werden:

Die Stränge 3', 3" werden durch Flüssigkeitsverteiler 61 und 62, die einer grösseren Verteilereinrichtung 6 zugehören, mit Flüssigkeit beaufschlagt. Die Flüssigkeitsmengen sind in einer Grundeinstellung proportional zu den entsprechenden Strangquerschnitten. Mittels Sensoren 81 und 82 oberhalb der Stränge 3', 3" werden durch eine Logikschaltung 8 beispielsweise Unterschiede der Temperatur im Dampfstrom registriert. Aufgrund der Sensorsignale werden mittels Ventilen 71, 72 die Flüssigkeitsmengen gesteuert, die den Verteilern 61, 62 zugeführt werden. Ein verstärkter Dampfstrom in einem Strang 3', 3" hat eine Erhöhung der Temperatur bei dem zugeordneten Sensor 81, 82 zur Folge. Eine Korrektur des Dampfstroms lässt sich durch eine stärkere Abkühlung mittels einer Vergrösserung der Flüssigkeitszufuhr erreichen.

## Patentansprüche

1. Packung für eine Gegenstrom-Hochdruckkolonne mit einer Anordnung von geformten Lamellen (1), die zumindest angenähert parallel zur Kolonnenachse (35) ausgerichteten sind und die so geformt sind, dass spalt- oder kanalartige Zwischenräume (100) zwischen den Lamellen vorliegen und dass ein Stoffaustausch zwischen einem Gasstrom und einem auf den Lamellenoberflächen als Rieselfilm fliessenden Flüssigkeit durchführbar ist, wobei
- die Packung ein Bündel von in Kolonnenachse sich erstreckenden Strängen (3, 3') umfasst,
- jeder Strang aus einem Stapel von Packungselementen (2: 21, 21', 22, 23) besteht, wobei benachbarte Elemente (2), die verschiedenen Strängen zugehören, jeweils einen zur Kolonnenachse senkrechten Packungsabschnitt (4) bilden,
- jedes Packungselement aus parallelen Lagen (10) aufgebaut ist, die durch Lamellen gebildet sind, und
- die Lagen derart orientiert sind, dass die Zwischenräume eines Packungselements durch querliegende Lamellen benachbarter Packungselemente, die dem gleichen Packungsabschnitt zugehören, seitlich begrenzt sind.

2. Packung nach Anspruch 1, **dadurch gekennzeichnet, dass** die Lagen (10) benachbarter Packungselemente (2) des gleichen Strangs (3) zueinander quer liegend angeordnet sind, dass insbesondere die Orientierung der Lagen jeweils um 90° wechselt.

3. Packung nach Anspruch 1 oder 2, **dadurch gekennzeichnet, dass** die Packungselemente (2) aus gewellten oder zickzackartig gefalteten Lamellen (1) aufgebaut sind, derart dass die spaltartigen (100) Zwischenräume zwischen den Lamellen jeweils eine offene Kreuzkanalstruktur aufweisen.

4. Packung nach einem der Ansprüche 1 bis 3, **dadurch gekennzeichnet, dass** entlang eines Strangs (3) die Packungselemente (2) bezüglich der Strangmittellinie (33) exzentrisch angeordnet sind, derart dass die Seitenflächen (11, 12) benachbarter Packungselemente (21, 22) gegeneinander versetzt sind.

5. Packung nach einem der Ansprüche 1 bis 4, **dadurch gekennzeichnet, dass** der Kolonnenquerschnitt durch die Stränge (3) in Felder aufgeteilt ist, die alle zumindest annähernd den gleichen Flächeninhalt aufweisen.

6. Packung nach einem der Ansprüche 1 bis 4, **dadurch gekennzeichnet, dass** die Packungselemente (2) im wesentlichen quaderförmig sind, wobei die Packungselemente (29) am Kolonnenrand eine der Rundung des Kolonnenquerschnitts angepasste Abweichung von der Quaderform aufweisen.

7. Packung nach Anspruch 6, **dadurch gekennzeichnet, dass** die quaderförmigen Packungselemente (2) quadratische Grundflächen aufweisen.

8. Packung nach einem der Ansprüche 1 bis 4, **dadurch gekennzeichnet, dass** die Grenzflächen zwischen den Strängen die Kolonnenquerschnittsebenen in Linien schneiden, die im wesentlichen ein Netz bilden, dessen Knotenpunkte auf einem hexagonalen Raster liegen.

9. Hochdruckkolonne für Stoff- und Wärmeaustausch oder chemische Reaktionen, wobei diese Prozesse zwischen einem Rieselfilm und einer sich im Gegenstrom bewegenden gas- oder dampfförmigen Phase stattfinden, welche Kolonne eine Packung nach einem der Ansprüche 1 bis 8 enthält,
**dadurch gekennzeichnet, dass** über der Packung ein Flüssigkeitsverteiler (6) angeordnet ist, mit dem eine weitgehend gleichmässige Verteilung herstellbar ist.

10. Kolonne nach Anspruch 9, **dadurch gekennzeichnet, dass** jeder Strang (3) mit einem seiner Querschnittsfläche entsprechenden Flüssigkeitsmenge beaufschlagbar ist.

11. Kolonne nach Anspruch 9, **dadurch gekennzeichnet, dass** jeder Strang (3) mit einer einstellbaren Flüssigkeitsmenge beaufschlagbar ist.

12. Verwendung einer Kolonne gemäss einem der Ansprüche 9 bis 11 zur Durchführung einer Rektifikation.

13. Verwendung einer Kolonne gemäss einem der Ansprüche 9 bis 11 zur Durchführung einer Absorption.

14. Verwendung einer Kolonne gemäss einem der Ansprüche 9 bis 11 zur Durchführung von chemischen Reaktionen, insbesondere von katalytisch aktivierten Reaktionen.

## Claims

1. Packing for a counterflow high pressure column with an array of shaped lamellae (1) which are aligned at least approximately parallel to the column axis (35) and which are so shaped that gap-like or channel-like intermediate spaces (100) are present between the lamellae and that a material exchange can be carried out between a gas flow and a liquid flowing as a trickle film on the lamellae surface, wherein
- the packing comprises a bundle of strings (3, 3') extending in the direction of the column axis,
- each string consists of a stack of packing elements (2: 21, 21', 22, 23) with adjacent elements (2) belonging to different strings each forming a packing section (4) perpendicular to the column axis,
- each packing element is constructed of layers (10) formed by lamellae, and
- the layers are oriented in such a manner that the intermediate spaces of a packing element are bounded laterally by transversely disposed lamellae of adjacent packing elements belonging to the same packing section.

2. Packing in accordance with claim 1, **characterised in that** the layers (10) of adjacent packing elements (2) of the same string (3) are arranged to lie transverse to one another; **in that**, in particular, the orientation of the layers respectively changes by 90°.

3. Packing in accordance with claim 1 or 2, **characterised in that** the packing elements (2) are constructed of corrugated or zigzag-folded lamellae (1) in such a manner that the gap-like (100) intermediate spaces between the sheets each have an open crossed channel structure.

4. Packing in accordance with one of the claims 1 to 3, **characterised in that** the packing elements (2) are arranged along a string (3) eccentrically with respect to the string centreline (33) in such a manner that the side surfaces (11, 12) of adjacent packing elements (21, 22) are offset with respect to one another.

5. Packing in accordance with one of the claims 1 to 4, **characterised in that** the column cross-section through the strings (3) is subdivided into regions which all have at least approximately the same surface area.

6. Packing in accordance with one of the claims 1 to 4, **characterised in that** the packing elements (2) have essentially the form of a rectangular parallelepiped, with the packing elements (29) at the boundary of the column having a deviation from the parallelepiped form matched to the rounded shape of the column cross-section.

7. Packing in accordance with claim 6, **characterised in that** the parallelepiped-like packing elements (2) have a square base area.

8. Packing in accordance with one of the claims 1 to 4, **characterised in that** the boundary areas between the strings intersect the cross-sectional planes of the column at lines which essentially form a network whose nodes lie on a hexagonal grid.

9. High pressure column for material and heat exchange or for chemical reactions, with these processes occurring between a trickle film and a gaseous or vapour-like phase moving in counterflow, said column containing a packing in accordance with one of the claims 1 to 8, **characterised in that** a liquid distributor (6) is placed above the packing by means of which a largely uniform distribution can be produced.

10. Column in accordance with claim 9, **characterised in that** each string (3) can be charged with an amount of liquid corresponding to its cross-sectional area.

11. Column in accordance with claim 9, **characterised in that** each string (3) can be charged with an adjustable amount of liquid.

12. Use of a column in accordance with one of the claims 9 to 11 for carrying out a rectification.

13. Use of a column in accordance with one of the claims 9 to 11 for carrying out an absorption.

14. Use of a column in accordance with one of the claims 9 to 11 for carrying out chemical reactions, in particular catalytically activated reactions.

## Revendications

1. Garnissage pour une colonne à haute presion à contre-courant avec un agencement de lamelles formées (1) qui sont orientées au moins aproximativement parallèlement à l'axe de colonne (35) et qui sont formées de façon que des espaces intermédiaires en forme de fente ou canal (100) soient présents entre les lamelles et qu'un échange de matière peut être effectué entre un flux de gaz et un liquide coulant comme film ruisselant sur les surfaces de lamelles, où
- le garnissage comprend un ensemble de faisceaux (3, 3') s'étendant dans l'axe de la colonne,
- chaque faisceau est constitué d'une pile d'éléments de garnissage (2 ; 21, 21', 22, 23) où des éléments avoisinants (2) qui appartiennent à des faisceaux différents, forment respectivement un tronçon de garnissage (4) perpendiculaire à l'axe de la colonne,
- chaque élément de garnissage est constitué de couches parallèles (10) formées par des lamelles et
- les couches sont orientées de telle sorte que les espaces intermédiaires d'un élément de garnissage sont limités latéralement par des lamelles s'étendant transversalement d'éléments de garnissage avoisinants qui appartiennent au même tronçon de garnissage.

2. Garnissage selon la revendication 1, **caractérisé en ce que** les couches (10) d'éléments de garnissage avoisinants (2) du même faisceau (3) sont disposées transversalement les unes aux autres, que notamment l'orientation des couches change respectivement de 90°.

3. Garnissage selon la revendication 1 ou 2, **caractérisé en ce que** les éléments de garnissage (2) sont formés par des lamelles ondulées ou pliées en zigzag (1) de façon que les espaces intermédiaires en forme de fente (100) entre les lamelles ont respectivement une structure de canaux croisés ouverte.

4. Garnissage selon l'une des revendications 1 à 3, **caractérisé en ce que** le long d'un faisceau (3), les éléments de garnissage (2) sont disposés d'une manière excentrique relativement à la ligne médian de faisceau (33) de telle sorte que les faces latérales (11, 12) d'éléments de garnissage avoisinants (21, 22) sont décalées les unes par rapport aux autres.

5. Garnissage selon l'une des revendications 1 à 4, **caractérisé en ce que** la section transversale de colonne est divisée par les faisceaux (3) en champs qui ont tous au moins approximativement la même aire de face.

6. Garnissage selon l'une des revendications 1 à 4, **caractérisé en ce que** les éléments de garnissage (2) sont sensiblement parallélépipèdes, où les éléments de garnissage (29) présentent au bord de la colonne un écart de la forme parallélépipède adapté à l'arrondi de la section transversale de la colonne.

7. Garnissage selon la revendication 6, **caractérisé en ce que** les éléments de garnissage parallélépipèdes (2) présentent des faces de base carrées.

8. Garnissage selon l'une des revendications 1 à 4, **caractérisé en ce que** les faces limites entre les faisceaux coupent les plans de section transversale de colonne selon des lignes qui forment essentiellement un réseau dont les noeuds se situent sur un réseau hexagonal.

9. Colonne à haute pression pour l'échange de matière et de chaleur ou pour des réactions chimiques, où ces processus ont lieu entre un film ruisselant et une phase gazeuse ou de vapeur se déplaçant à contre-courant, ladite colonne renfermant un garnissage selon l'une des revendications 1 à 8, **caractérisée en ce qu'**il est disposé au-dessus du ganissage un distributeur de liquide (6) au moyen duquel peut être établie une distribution sensiblement uniforme.

10. Colonne selon la revendication 9, **caractérisée en ce que** chaque faisceau (3) peut être chargé par une quantité de liquide correspondant à sa face en section transversale.

11. Colonne selon la revendication 9, **caractérisée en ce que** chaque faisceau (3) peut être chargé par une quantité de liquide réglable.

12. Utilisation d'une colonne selon l'une des revendications 9 à 11 pour exécuter une réctification.

13. Utilisation d'une colonne selon l'une des revendications 9 à 11 pour exécuter une absorption.

14. Utilisation d'une colonne selon l'une des revendications 9 à 11 pour exécuter des réactions chimiques, notamment des réactions catalytiquement activées.
